# Europäisches Patentamt
# European Patent Office
# Office européen des brevets

(19)

(11) Numéro de publication: **0 149 943**
**B1**

(12)
# FASCICULE DE BREVET EUROPÉEN

(45) Date de publication du fascicule du brevet:
**04.11.87**

(51) Int. Cl.⁴: **F 02 K 1/12**

(21) Numéro de dépôt: **84402648.4**

(22) Date de dépôt: **19.12.84**

(54) Ensemble d'éjection, en particulier pour turboréacteur.

(30) Priorité: **21.12.83 FR 8320437**

(43) Date de publication de la demande:
**31.07.85 Bulletin 85/31**

(45) Mention de la délivrance du brevet:
**04.11.87 Bulletin 87/45**

(84) Etats contractants désignés:
**DE FR GB**

(56) Documents cité:
**EP-A-0 033 044**
**BE-A-525 114**
**FR-A-1 107 564**
**FR-A-1 600 362**
**FR-A-2 145 362**
**FR-A-2 289 747**
**GB-A-862 405**
**US-A-2 969 641**
**US-A-3 730 436**
**US-A-3 820 720**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Camboulives, André A. M. L., 26, rue Chevert, F-75007 Paris (FR)**

(74) Mandataire: **Moinat, François, S.N.E.C.M.A. Service des Brevets Boîte Postale 81, F-91003 Evry Cedex (FR)**

LIBER, STOCKHOLM 1987

EP 0 149 943 B1

## Description

La présente invention concerne un ensemble d'éjection, en particulier pour turboréacteur, composé notamment d'une tuyère primaire et d'un ensemble de volets froids.

US-A-3 820 720 et US-A-3 730 436 concernent un même type de tuyère d'éjection comportant quatre ensembles annulaires de volets: volets divergents, volest froids articulés entre une enveloppe externe et les volets divergents, volets de compensation. Un anneau transmet l'action de vernis au volet commandé par l'intermédiaire d'un levier. Entre les bords de volets adjacents, est placé un dispositif de synchronisation à liaison télescopique.

FR-A-2 474 592 décrit une tuyère primaire comportant notamment un ensemble annulaire de 2N volets, dits "chauds", dont les bords amont respectifs sont articulés sur un élement de structure de forme annulaire, solidaire du canal d'éjection, des vérins de commande, dont les corps sont reliés à des parties fixes de la tuyère, et un ensemble de N levier de transmission; chaque levier de transmission s'étend sensiblement sur toute la largeur d'un volet chaud sur deux, dit "volet commandé", et est monté pivotant sur au moins un axe, lui-même solidaire de l'élément annulaire de structure; les extrémités des tiges de commande des vérins sont respectivement articulées sur au moins un levier de transmission sur deux, en des points d'articulation qui sont écartés des axes respectifs de pivotement desdits leviers.

Dans cette tuyère, antérieurement connue, les mouvements de pivotement de chaque paire de leviers de transmission, associés respectivement, à deux volets commandée voisins sont synchronisés par deux systèmes de leviers parallèles, comportant chacun un levier coudé, dont une extrémité est articulée sur l'élément annulaire de structure, tandis que son autre extrémité est reliée par un levier rectiligne à une articulation prévue près du bord amont du levier de transmission correspondant, les leviers coudés respectifs de ces deux systèmes de leviers étant accouplés, au niveau de leurs coudes respectifs, par un tube de torsion. Les moyens mécaniques qui assurent la synchronisation des pivotements de deux leviers de transmiseion voisins de cette tuyère antérieurement connue, sont donc relativement complexes, lourds et coûteux.

L'élément annulaire de structure dont est pourvue cette tuyère antérieurement connue présente d'autre part une réalisation compliquée par le fait qu'il doit comporter extérieurement un grand nombre de chapes, servant, les unes à l'articulation dudit élément annulaire sur l'extrémité aval du canal d'éjection de la tuyère, et, les autres, à l'articulation, sur le même élément annulaire de structure, des volets chauds, des leviers de transmission, des corps des vérins de commande et des systèmes de leviers de synchronisation.

La présente invention concerne un ensemble d'éjection, en particulier pour turboréacteur, dont la tuyère primaire est du type décrit dans FR-A-2 474 592 rappelé ci-dessus. La tuyère primaire de cet ensemble d'éjection selon la présente invention s'en distingue cependant, ainsi que des autres tuyères antérieurement connues, notamment par une simplification très importante du dispositif de synchronisation du pivotement des différents volets chauds, l'ensemble des volets chauds étant appelé tuyère primaire, cette simplification influant d'une façon très favorable sur le coût de fabrication, les frais d'entretien, la facilité de maintenance et la fiabilité de fonctionnement de la tuyère selon la présente invention. Cet ensemble d'éjection s'en distingue aussi par une couronne de volets froids dont l'asservissement aux mouvements des volets chauds est en particulier remarquable.

L'ensemble d'éjection selon la présente invention est du type qui vient d'être indiqué, et il est caractérisé en ce que les volets sont articulés sur des supports et par le fait que les bords voisins de chaque paire de leviers de commande, porteurs des volets chauds, sont munis de moyens de coopération desdits bords voisins, ces moyens assurant la synchronisation du mouvement de pivotement desdits leviers de commande et des volets commandés qui leur sont associés et par le fait que ces leviers de commande sont articulés du côté radicalement interne de la tuyère primaire autour d'axes concurants portés par ledit support et enfin par le fait qu'il comporte une couronne de volets froids asservie en position longitudinale et en braquage sur l'axe de la turbonmachine par un système de leviers biellettes et poussoirs à la position desdits leviers de commande.

Grâce à cette coopération des bords voisins de deux leviers de transmission, la synchronisation du pivotement des différents volets chauds peut être assurée par un moyen mécanique extrêmement simple, peu coûteux et très fiable.

Selon la présente invention, les axes géométriques de pivotement de deux leviers de commande adjacents porteurs des volets chauds de la tuyère primaire font entre eux un angle proche de 360/N degrés, N étant le nombre de leviers de commande, et les bords voisins de ces deux leviers de commande sont accouplés, en des points écartés de leurs axes respectifs de pivotement, par une jumelle coulissante d'accouplement, conçue de façon à compenser la variation de l'écartement des points d'accouplement lors du pivotement des volets, de manière que les leviers de commande et les jumelles d'accouplement forment une chaîne annulaire de longueur variable. Comme le point d'articulation de la tige des vérins sur le levier de commande correspondant doit être écarté de l'axe de pivotement dudit levier, de manière que lesdits vérins puissent exercer sans efforts trop grands le couple de commande nécessaire sur lesdits leviers, il faut que chaque levier de commande, qui, dans la direction périphérique de la tuyère s'étend sensiblement sur toute la longueur du volet, ait sensiblement la forme d'une plaque trapézoïdale, laquelle plaque peut être plus ou moins épaisse et de préférence évidée de façon à lui donner la forme d'un portique pour réduire sa masse totale. Bien que les bords voisins des deux leviers adjacents soient très rapprochés l'un de l'autre, le pivotement des différente leviers, porteurs des volets chauds, se traduit par une variation de l'écartement des bords voisins des deux leviers adjacents.

Cette variation est d'autant plus importante que l'ecartement entre les bords voisins des deux leviers de commande adjacents est mesuré en s'éloignant de leurs axes respectifs de pivotement. Dans le cas de cette forme de réalisation préférée de l'invention, la difficulté qui vient d'être indiquée est surmontée en accouplant les bords voisins de deux leviers de commande adjacents à l'aide d'une jumelle coulissante d'accouplement susceptible de compenser les variations de l'écartement de ses points respectifs de fixation lors du pivotement des leviers et des volets chauds dont ils sont porteurs.

De cette façon et comme indiqué plus haut, les leviers de commande et les jumelles coulissantes d'accouplement forment une chaîne annulaire de longueur variable, ce qui la distingue essentiellement de la chaîne annulaire d'organes de synchronisation, qui est prévue notamment dans le brevet français précédemment mentionné, chaîne dont la longueur est au contraire invariable.

Dans une forme de réalisation particulière de l'invention, la jumelle coulissante d'accouplement, portée par un des deux leviers de commande adjacents, comprend une rotule femelle dans laquelle est engagée une rotule mâle portée par l'autre levier de commande. La jumelle, elle-même, pivote autour d'un axe situé au voisinage immédiat du plan passant par l'axe de la tuyère et par le point d'intersection des axes de pivotement desdits leviers adjacents. Le point rotulant de la jumelle, là où effectivement se fait la liaison des deux leviers de commande, est également au voisinage de ce plan. Lors du mouvement de la tuyère, ce point rotulant se déplace un peu de part et d'autre de ce plan. Il en résulte un très léger décalage d'angle par rapport à l'axe de la tuyère de deux volets adjacents.

Il est à noter que ladite jumelle coulisse dans une chape. Cette chape et l'axe d'articulation de la jumelle sont portés par le même levier. On comprend que le pivotement de la jumelle autour de son axe compense la variation d'écartement des points d'accouplement des bords voisins de deux leviers lors du pivotement desdits leviers, sans que ceux-ci cessent d'être accouplés entre eux, grâce au coulissement de la jumelle dans une chape pratiquée dans le levier qui porte ladite jumelle.

Par ailleurs, le volet asservi en appui sur deux volets adjacents, a une forme quasi triangulaire (en fait, trapézoïdale) dont la pointe est du côté amont par rapport au flux de gaz. C'est par un très léger basculement autour de cette pointe que le volet asservi assure l'étanchéité par rapport aux deux volets commandés adjacents.

Dans une forme de réalisation de l'invention, un levier de commande sur deux est muni d'un bras avec une rotule mâle de chaque côté, et chacun des autres leviers de commande est muni d'une jumelle avec rotule femelle de chaque côté, si bien que chaque levier de commande présente un plan axial de symétrie, mais qu'il faut deux types distincts de leviers, montés alternativement.

Dans une variante de la tuyère primaire selon la présente invention, chaque levier de commande est muni d'un bras avec rotule mâle d'un côté et d'une jumelle coulissante avec rotule femelle de l'autre côté, si bien que ledit levier de commande ne comporte pas de plan axial de symétrie. Par contre, tous les leviers de commande sont identiques, ce qui rend un peu moins onéreux leur fabrication et leur stockage en rechanges.

Dans la forme de réalisation préférée de la tuyère primaire selon la présente invention, les deux leviers de commande adjacents, porteurs des volets chauds, sont montés pivotants sur deux portées, disposées aux extrémités d'un même support, qui est fixé à l'élément annulaire de structure, par exemple au moyen d'un crochet et d'une vis traversant ledit crochet. Cette forme de réalisation se distingue particulièrement des réalisations antérieures, par la simplicité de l'élément annulaire de structure, qui doit seulement être muni, sur sa face arrière, à intervalles réguliers, de crochets pour la fixation desdits supports.

De préférence, chaque crochet est ouvert vers l'intérieur de la tuyère, et la vis qui le traverse est vissée par son extrémité dans un trou taraudé de l'axe d'articulation. Ceci pour tenir compte du sens de la résultante des forces appliquées sur l'ensemble du levier et de son volet. La vis de fixation n'est pratiquement pas sollicitée par ce système de forces.

Dans la forme de réalisation préférée de l'invention, chaque levier de commande a sensiblement la forme d'un portique, dont les branches latérales sont montées respectivement pivotantes sur des supports de tourillon de deux leviers de commande adjacents qui sont alignés et solidaires de l'élément annulaire de structure, tandis que la barre transversale porte, à ses extrémités, le système d'accouplement avec les deux autres leviers de commande adjacents.

Selon une autre caractéristique, chaque rotule mâle est portée par un bras prolongeant l'une des extrémités de la barre transversale du levier de commande correspondant, et la jumelle avec la rotule femelle est montée dans un évidement de l'une des extrémités de la barre transversale du levier correspondant, de façon à pivoter autour d'un axe perpendiculaire à la branche latérale correspondante dudit levier et à rester en contact dans une chape pratiquée dans le dit levier.

Selon une autre caractéristique, chaque volet commandé prend appui, sous l'action de la pression des gaz éjectés, sur les extrémités des branches latérales du levier de commande correspondant, ainsi que, au moins ponctuellement, sur deux bras, prolongeant vers l'aval lesdites branches latérales du levier. De préférence, chaque volet commandé est fixé, par exemple vissé aux extrémités aval des bras du levier de commande correspondant.

Dans l'ensemble d'éjection selon l'invention la tuyère primaire précédemment évoquée est associée à une tuyère à volets froids d'un type connu. Dans une solution préférée, un mécanisme d'asservissement par leviers et biellettes des volets froids, par rapport aux mouvements commandés des volets chauds permet aux premiers, lorsque la tuyère primaire s'ouvre, notamment à pleine réchauffe, de déplacer vers l'aval les bords aval des volets froids et inversement de déplacer vers l'amont les bords aval des volets froids dans les conditions de fonctionnement du réacteur sans réchauffe en même temps que respectivement les volets froids s'ouvrent ou au contraire se braquent, le déplacement angulaire des volets froids pouvant être moindre que celui des volets chauds.

En faisant varier les bras desdits leviers d'asservissement et la longueur des biellettes, on comprend que l'on peut faire varier corrélativement la position longitudinale relative du bord aval de l'ensemble des volets froids par rapport au bord aval de la tuyère primaire et l'angle de braquage de ceux-ci. Ces variations donnent des paramètres d'adaptation supplémentaires permettant d'optimiser le rendement de l'ensemble d'éjection (tuyère primaire et couronne de volets froids associés), en fonction de la mission de l'avion.

A titre d'exemple, on a décrit ci-dessous et illustré schématiquement aux dessins annexés, un mode de réalisation d'un ensemble d'éjection pour turboréacteur selon la presente invention:

- la figure 1 est une vue en perspective d'une partie de la tuyère primaire selon la présente invention,

- la figure 2 est une vue en élévation et en coupe partielle montrant les bords voisins de deux leviers de commande de cette partie de la tuyère primaire ainsi que les organes de pivotement et de synchronisation,

- la figure 3 est une vue en coupe suivant la ligne III-III de la figure 2,

- la figure 4 est une vue en coupe suivant la ligne IV-IV de la figure 2,

- la figure 5 illustre le mode de montage de l'un des vérins de commande de la tuyère primaire,

- la figure 6 est une vue, en coupe par un demi-plan axial d'une tuyère primaire selon la présente invention, équipée d'une couronne de volets froids conformément à la présente invention,

-la figure 7 est une vue en coupe suivant la ligne VII-VII de la figure 6.

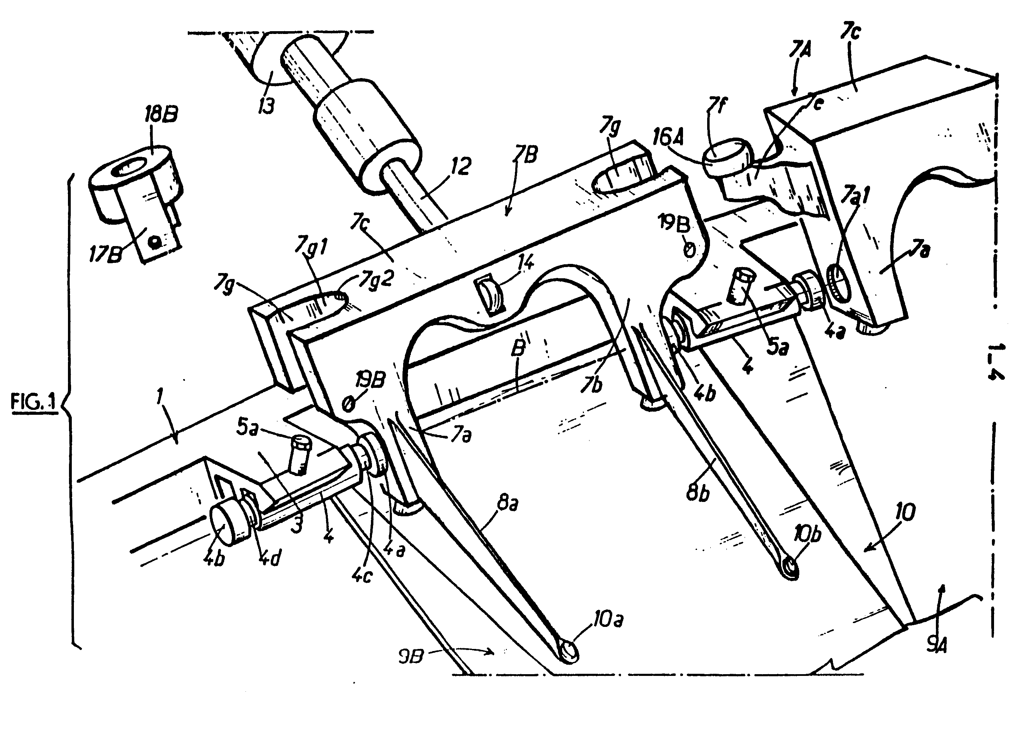

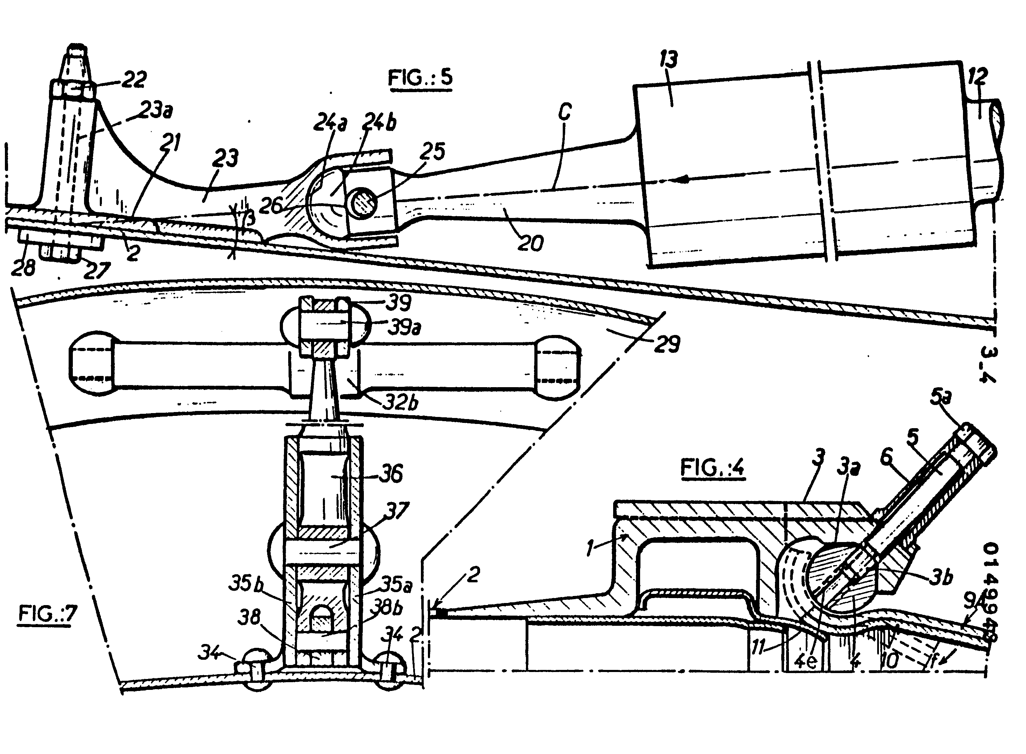

Dans la forme de réalisation représentée d'un ensemble d'éjection de turboréacteur selon la présente invention, qui est illustrée pour la tuyère primaire sur les figures 1 à 4, on a désigné par 1 un élément annulaire de structure, qui est fixé par tous moyens appropriés, notamment soudé au bord aval du canal d'éjection des gaz, 2 (figure 4), de la tuyère. Dans la forme de réalisation considérée, l'élément annulaire 1 a une section transversale en forme de U, ouverte vers l'intérieur de la tuyère, c'est-à-dire du côté de son axe (non représenté). Sur la face arrière, c'est-à-dire tournée vers l'aval, de l'élément annulaire 1 sont disposés, à intervalles réguliers, des crochets 3, qui sont également ouverts vers l'intérieur de la tuyère, et qui comportent intérieurement deux surfaces planes, 3a et 3b qui, dans une vue longitudinale telle que celle de la figure 4, sont respectivement parallèle et perpendiculaire à l'axe de la tuyère. Dans chaque crochet, 3, est fixé un support 4 de tourillon de deux leviers de commande adjacents. Ce support 4 est également muni de deux plats, venant coopérer avec les plats intérieurs, 3a et 3b, du crochet 3. Le support 4 est traversé diamétralement par un trou taraudé 4e, dans lequel est vissée l'extrémité d'une vis 5 à tête hexagonale 5a; de préférence, la tige de la vis 5 est relativement longue, comme visible sur la figure 4, et sa tête prend appui sur la partie correspondante du crochet 3 par l'intermédiaire d'un élément tubulaire 6 de longueur appropriée.

Cette disposition garantit une tonne portée de la tête de vis 5a sur le tube 6, et réduit les contraintes de flexion que les défauts de mise en place du support 4 peuvent imposer à ladite vis.

Chaque support tel que 4 présente, dans la direction périphérique de l'élément annulaire 1, une longueur qui peut être un peu supérieure à la largeur, dans la même direction, du crochet correspondant, 3, et il porte, à ses deux extrémités, deux bouts d'axe formant des portées cylindriques, 4a et 4b.

On indiquera ultérieurement les fonctions respectives du support 4, des portées cylindriques 4a et 4b, ainsi que le rôle des sections réduites 4c et 4d qui réunissent les portées 4a et 4b au support 4.

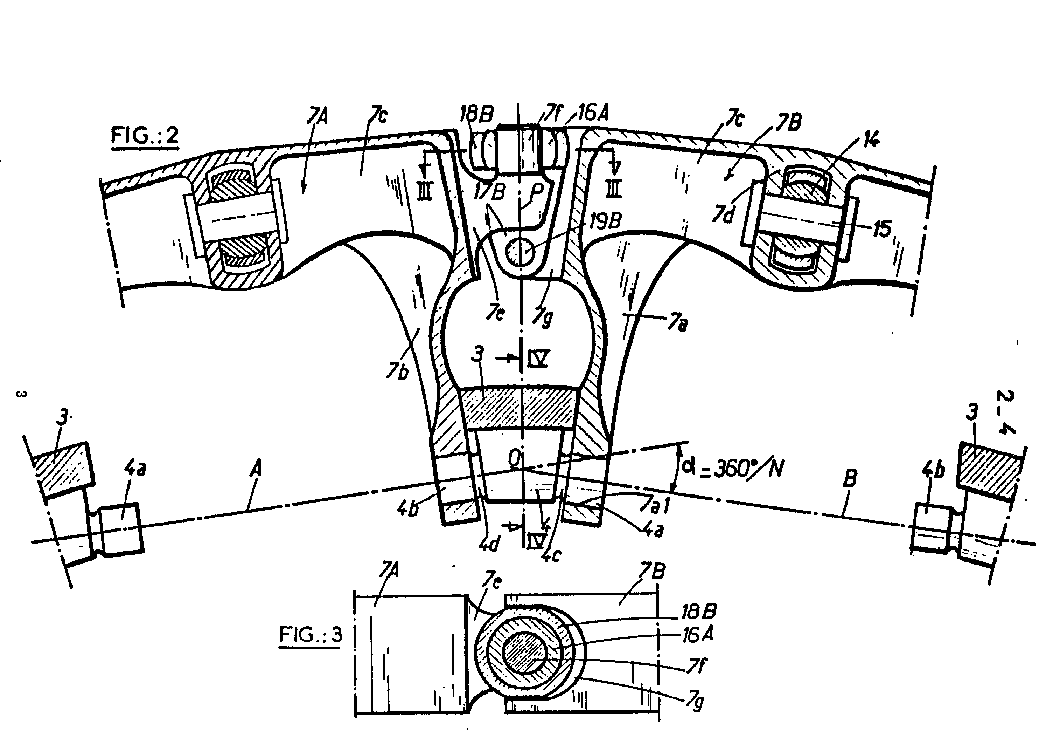

Comme visible sur les figures 1 à 3, un levier de commande 7A ou 7B est monté, alternativement dans chaque intervalle entre deux crochets 3 voisins. On a désigné par 7A et 7B deux leviers de commande adjacents. Dans la forme de réalisation considérée, chacun des leviers 7A et 7B présente un plan de symétrie transversal et les leviers 7A et 7B ne sont pas identiques l'un à l'autre, mais présentent cependant la même forme générale d'un portique, comportant une barre transversale, 7c, qui s'étend dans la direction périphérique, et deux branches latérales, 7a et 7b, sensiblement perpendiculaires à la barre transversale 7c. Les bords voisins des deux leviers de commande adjacents 7A et 7B, sont munis, au niveau de leurs branches latérales voisines, 7a et 7b respectivement, de logements, tels que 7a1 (figure 1), par chacun desquels la branche latérale correspondante, 7a, peut être engagée sur la portée, 4a, la plus proche, du support 4, disposé dans l'intervalle entre les leviers voisins, 7A et 7B. Les logements tels que 7a1 sont évidemment pourvus de surfaces, qui permettent à chacun des leviers de commande, par exemple 7B (figure 1) de pivoter sur les portées 4a et 4b engagées dans les logements correspondants de ses branches latérales 7a et 7b, lesdites portées 4a et 4b étant évidemment alignées suivant un même axe B, qui constitue l'axe géométrique de pivotement du levier de commande considéré 7B. Les axes des portées 4a, 4b d'un support 9 font entre eux un angle égal à 360/N degrés, N étant le nombre total de leviers 7A et 7B, comme visible sur la figure 2.

Les branches latérales, 7a et 7b, de chaque levier de commande tel que 7B (figure 1) portent respectivement des bras latéraux, 8a et 8b, qui s'étendent vers l'aval de la tuyère, à peu près perpendiculairement au plan médian du levier en forme de portique, 7B. Un volet chaud, du type dit "commandé", directement ou indirectement, et désigné par la référence 9A et 9B, est disposé en-dessous des branches latérales 7a et 7b du levier de commande correspondant, 7A ou 7B, et de ses bras latéraux 8a et 8b. Chaque volet commandé, 9A et 9B, est fixé par tous moyens appropriés, notamment par des vis 10a et 10b, aux extrémités respectives des bras latéraux 8a et 8b, tandis que la pression des gaz éjectés applique chacun des volets commandés, 9A ou 9B, contre des portées aménagées aux extrémités inférieures des branches latérales, 7a et 7b, du levier de commande correspondant, 7A ou 7B. Entre deux volets commandés tels que 9A et 9B, est inséré un volet suiveur 10 qui dans l'exemple représenté est de forme presque triangulaire (en fait trapézoïdale symétrique avec un côté parallèle de très faible longueur) et est dimensionné de façon à déborder en-dessous des bords voisins des deux volets commandés 9A et 9B, de manière que les bords de chaque volet suiveur tel que 10 soient appliqués contre les bords correspondants des volets commandés voisins, tels que 9A et 9B, par l'action de la pression des gaz éjectés. Le volet suiveur 10 est maintenu longitudinalement et périphériquement en place par un système connu tel qu'épingles coopérant avec les éléments fixés sur la paroi externe des volets chauds voisins.

On voit sur la figure 4 que le support 4, précédemment décrit, sert d'axe de pivotement au volet suiveur 10, par l'intermédiaire des bords correspondants des volets commandés voisins, tels que 9A; à cet effet, les bords amont des volets 9A, 9B et 10 sont cintrés à des rayons appropriés de façon à se déplacer, en restant en superposition, au contact de la surface périphérique de l'axe 4, lorsque les volets mentionnés pivotent dans le sens de la flèche f, comme indiqué en pointillés sur la figure 4, ce mouvement dans le sens de la flèche f correspondant à la fermeture de la tuyère. La figure 4 montre également que l'étanchéité pour les gaz éjectés, au niveau de l'articulation des volets 9A, 9B et 10 sur l'axe 4, est assurée par une tôle 11, convenablement cintrée, éventuellement segmentée, et maintenue appliquée, par la pression des gaz éjectés, d'une part, contre les bords cintrés des volets 9A, 9B et 10 et d'autre part, contre l'ouverture de l'élément annulaire 1 à section en U.

Selon le mode de réalisation de la figure 1 seuls les leviers de commande du type 7B sont attaqués, sensiblement dans leur plan de symétrie médian, par la tige 12, mobile dans un plan axial de la tuyère, d'un vérin de commande 13 dont le montage sera décrit ultérieurement. Bien entendu, il est possible, comme cela est représenté en pointillés sur la figure 2, que les leviers de commande du type 7A soient aussi attaqués sensiblement dans leur plan de symétrie médian par la tige 12 d'un vérin de commande 13 dont le montage sera décrit ultérieurement. On voit notamment sur la figure 2 que l'extrémité de la tige 12 du vérin de commande est articulée sur un élément 7d du levier de commande 7B, par l'intermédiaire d'une rotule 14 et d'un axe de pivotement 15, s'étendant sensiblement dans la direction de la barre transversale 7c du levier 7B.

Notamment, dans le cas de la figure 1, pour que les pivotements que chaque vérin 13 et sa tige 12 communiquent à l'un des leviers de commande 7B, soient également transmis aux deux leviers voisins du type 7A, et que, par suite, les deux volets 9A pivotent en synchronisme avec le volet intercalé 9B, il est nécessaire de prévoir des organes de transmission et de synchronisation qui, dans la forme de réalisation considérée de l'invention, sont constitués de la façon suivante: la barre transversale 7c de chacun des leviers de commande 7A est prolongée à ses deux extrémités, en direction du levier de commande 7B voisin, par un bras court, 7e, qui porte à son extrémité un axe 7f, peu incliné sur la branche larérale correspondante 7b du levier de commande 7A, et disposé de préférence dans le plan P (figure 2), qui passe par l'axe (non représenté) de la tuyère, et par le point de concours 0 des axes de pivotement, A et B, des leviers de commande voisins, 7A et 7B. Sur cet axe 7f, qui se trouve sensiblement dans le plan radial P, précédemment défini, est montée une rotule mâle, 16 A; dans cette forme de réalisation, une autre rotule mâle analogue à 7A, mais non visible sur les figures 1 et 2, est montée, de la même façon, à l'autre extrémité de la barre transversale 7c, du levier de commande 7A.

La barre transversale 7c de chacun des leviers de commande du type 7B est munie par contre, à ses deux extrémités, d'évidements en forme de chape, 7g, qui, dans l'exemple de réalisation considéré, s'étendent sensiblement dans la direction des branches latérales 7a et 7b, et traversent de part en part les extrémités mentionnées de la barre transversale 7c; les parois de chaque chape 7g présentent notamment deux surfaces planes, parallèles, 7g1, disposées l'une en regard de l'autre, en avant du fond de la chape, 7g2, qui peut avoir une forme quelconque, mais de préférence sensiblement cylindrique. Dans chacune des chapes 7g, une jumelle coulissante, 17B, portant une rotule femelle 18B, est montée de manière à pouvoir pivoter en restant en contact avec les surfaces planes parallèles telles que 7g1 des chapes correspondantes 7g, autour d'un axe 19B dont les extrémités sont fixées dans les parois de la chape 7g correspondante, et qui traversent la jumelle coulissante 17B; la direction de chaque axe tel que 19B étant perpendiculaire à celle des branches latérales 7a et 7b, on comprend que la jumelle coulissante 17B avec sa rotule femelle 18B peut pivoter dans la chape 7g correspondante, autour de l'axe 19B en restant en contact avec les surfaces planes 7g1 de la chape. Les bords voisins de deux leviers de commande adjacents, 7A et 7B, sont donc accouplés l'un à l'autre par engagement de la rotule mâle 16A dans l'évidement intérieur de la rotule femelle 18B portée par la jumelle coulissante 17B.

Dans le plan médian quand tous les leviers sont perpendiculaires à l'axe de la tuyère, l'écartement entre les branches 7a et 7b des deux leviers adjacents est au maximum. Quand les leviers s'écartent de cette position dans le sens provoquant soit l'ouverture soit la fermeture de la tuyère primaire, les deux branches 7a et 7b de ces leviers adjacents se rapprochent et le point rotulant de la jumelle s'enfonce dans la chape où coulisse ladite jumelle.

Les organes 7e-7f-16A d'une part et 17B-18B-19B d'autre part, forment donc un dispositif d'accouplement des leviers adjacents 7A et 7B, qui permet de compenser les variations de l'écartement des bords voisins des leviers adjacents 7A et 7B au cours de leur pivotement et cela tout en assurant l'asservissement des leviers 7A au pivotement des leviers commandés 7B, et, par suite, la synchronisation du pivotement de chacun des volets 9A et 9B, associés respectivement aux leviers de commande 7A et 7B. On comprend aussi que les leviers de commande 7A et 7B et les organes d'accouplement, précédemment mentionnés, de leurs bords voisins, forment une chaîne annulaire dont la longueur varie, lors du pivotement des leviers de commande, ces variations de longueur intervenant au niveau de la jumelle coulissante d'accouplement des leviers adjacents.

Dans une autre variante de l'invention, qui n'est pas illustrée, tous les leviers de commande sont du même type, chacun étant muni, à une extrémité de sa barre transversale 7c, d'une rotule mâle telle que 16A, et à l'autre extrémité de ladite barre transversale, d'une chape telle que 7g, dans laquelle une jumelle, telle que 17B, portant une rotule femelle, telle que 18B, est montée pivotante autour d'un axe tel que 19B. Ces leviers de commande, d'un type unique, ne présentent cependant plue de plan transversal de symétrie. Dans le cas de cette seconde forme de réalisation on peut bien entendu associer un vérin de commande tel que 13 à chacun des leviers de commande, et non pas seulement à un sur deux, comme pour la variante précédemment décrite, représentée sur les figures 1 à 4. On notera également que, contrairement à cette précédente variante, le nombre de leviers 7 et de volets associés 9 n'est plus obligatoirement un nombre pair.

Pour démonter la tuyère précédemment décrite, on peut procéder de la façon suivante.

Après enlèvement de la tôle cintrée 11 (figure 4), qui pourra être fixée par un moyen connu à l'élément annu laire de structure 1, on peut démonter les volets suiveurs tels que 10, puis, après avoir défait les vis 10a et 10b, on peut démonter chacun des volets commandés 9A et 95. On démonte ensuite les vis de fixation 5 des différents supports 4, et l'on sépare les leviers de commande tels que 7B, des extrémités des tiges 12 des vérins de commande 13. A l'aide d'outils spéciaux, on procède ensuite à une réduction du diamètre de la chaîne annulaire formée par les leviers de commande 7A, 7B et les supports 4, sur lesquels ils sont montés pivotants; en effet, ces supports 4 peuvent sortir des crochets 3 vers l'intérieur de la tuyère, la diminution de la longueur totale de la chaîne annulaire mentionée, due à la réduction de son diamètre, étant autorisée, d'une part, par les sections réduites 4c et 4d (figures 1 et 2), qui sont prévues respectivement entre chaque support 4 et les portées correspondantes 4a et 4b; en d'autres termes, chacune de ces portées pénètre davantage dans le logement correspondant, de l'ordre de la largeur de la section réduite 4c et, d'autre part, la rotation de la rotule 18 B s'effectue jusqu'au fond la chape 7g. Il est alors possible de déplacer l'ensemble de la chaîne annulaire mentionnée vers l'aval de la tuyère puis de désaccoupler un ou plusieurs leviers portant chacun un volet de l'ensemble des volets par enlèvement de deux vis 19 (ou davantage). Le montage de la tuyère précédemment décrite peut avoir lieu en procédant aux opérations qui viennent d'être indiquées, dans l'ordre inverse.

La figure 5 illustre un mode de montage préféré des vérins de commande 13 dont est pourvue la tuyère selon la présente invention. On voit sur cette figure que chaque vérin 13 et sa tige de commande 12 sont choisis suffisamment longs pour que, en toutes positions du levier de commande commandé par la tige 12, l'axe commun C des éléments 12 et 13 fasse un angle $\beta$ petit avec la paroi du canal d'éjection des gaz, 2. Cette condition permet de relier directement le corps 13 du vérin à la paroi 2 du canal d'éjection, sans que celle-ci risque d'être déformée par les composantes radiales des réactions encaissées par le corps du vérin 13. Ceci évite la nécessité de prévoir un anneau spécial pour encaisser les efforts radiaux mentionnés. Par suite, dans cette forme de réalisation particulièrement avantageuse de l'invention chaque vérin de commande 13, supposé à déplacement linéaire, a l'extrémité amont de son corps 13, articulée, par l'intermédiaire d'une tige relativement longue, 20, et d'une articulation à rotule, à l'extrémité aval d'une patte d'étalement des efforts, 21, qui est appliquée, sur une partie au moins de sa longueur, sur la, paroi externe 2 du canal d'éjection, à laquelle l'extrémité amont de ladite patte d'étalement 21 est fixée, par exemple au moyen d'un boulon 22. Plus particulièrement, la patte d'étalement 21 porte extérieurement un bras 23 qui s'étend au-delà de ladite patte d'étalement 21, en direction de la tige 20, et dont l'extrémité est aménagée de façon à former une demi-rotule femelle, 24a avec laquelle coopère une demi-rotule mâle, 24b, fixée à l'extrémité de la tige 20; une goupille 25 assemble les parties femelles, 24a, et mâle, 24b, de l'articulation à rotule, cette goupille de maintien en place et de sécurité étant engagée avec un léger jeu dans un logement 26 de l'extrémité de la tige 20, qui s'étend perpendiculairement au plan de déplacement du vérin 13, c'est-à-dire au plan de la figure 5, et dont la section transversale est ovalisée dans la direction de l'axe C dudit vérin 13. Le bras 23 est solidaire, vers l'amont, d'un manchon 23a, dont l'axe est perpendiculaire à la patte 21; un boulon 27, dont la tête prend appui sur la paroi interne du canal d'éjection 2, par exemple par l'intermédiaire d'une rondelle 28, traverse un perçage de ladite paroi 2 ainsi que le manchon 23a, l'assemblage étant assuré par l'écrou 22, qui est vissé sur l'extrémité la plus extérieure du boulon 27, en prenant appui sur l'extrémité correspondante du manchon 23a. De préférence, le bras 23 est disposé dans le prolongement de la tige 20, de manière que l'axe C du vérin 13 coupe la patte d'étalement 21 sensiblement au niveau de son boulon de fixation 27. La disposition illustrée sur la figure 5 correspond au cas où le vérin 13, dont le corps peut se déplacer autour de l'articulation à rotule 24a-24b-26, occupe sa position moyenne.

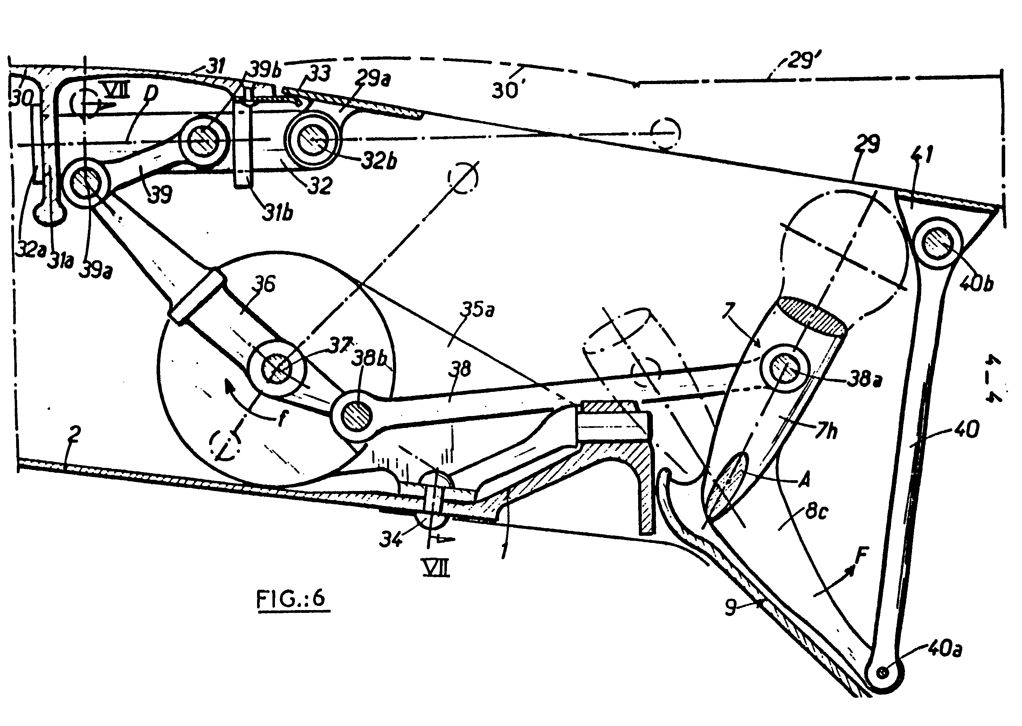

Sur les figures 6 et 7, on a représenté schématiquement la tuyère primaire selon l'invention, équipée d'une couronne de volets froids qui la rend particulièrement avantageuse. On va décrire seulement les éléments nouveaux par rapport aux figures 1 à 5, l'ensemble de la tuyère primaire décrite dans lesdites figures 1 à 5 et de la couronne des volets froids qui va maintenant être décrite constituant l'ensemble d'éjection de la turbomachine, conforme à l'invention.

L'ensemble d'éjection, selon la présente invention, comporte, en effet en plus de la tuyère primaire avec volets chauds tels que 9 (figure 6) un ensemble annulaire de volets dits "froids" 29, qui enveloppe sans contact l'ensemble des volets chauds 9. Sur la figure 6, les composants 7, 9 et 29 ont été représentés en traits pleins dans les positions respectives qu'ils occupent lorsque la tuyère primaire est complètement fermée, les volets chauds tels que 9, étant notamment fortement inclinés en direction de l'axe (non représenté) de la tuyère. Comme visible sur la partie gauche de la figure 6, le canal d'éjection 2 est enveloppé sans contact par une jupe coulissante, 30, de forme sensiblement cylindrique, et disposée de façon que son axe coïncide avec celui de la tuyère. Vers l'aval, la jupe 30 est solidaire d'un anneau de raidissement 31, plus épais, qui comporte vers l'amont, c'est-à-dire vers sa zone de raccordement avec l'extrémité aval de la jupe coulissante 30, une bride intérieure 31a, et, vers l'aval, un certain nombre d'oreilles internes, 31b, par exemple autant que de leviers de commande 7.

La bride 31a et l'oreille correspondante 31b présentent des ouvertures alignées dans une direction D, sensiblenent parallèle à l'axe de la tuyère, et un poussoir 32, constitué par exemple par une tige cylindrique, traverse ces deux perçages, de manière que son extrémité amont, 32a, soit solidaire de la bride 31a, tandis que son extrémité aval porte, au-delà de l'oreille 31b, un axe d'articulation 32b, pour l'articulation du volet froid 29, correspondant. Une tôle incurvée, 33, établit l'étanchéité entre le bord aval de l'anneau de raidissement 31 et le bord amont du volet froid 29.

Au niveau du poussoir 32, l'élément annulaire de structure, 1, qui est fixé, par exemple, au moyen de rivets tels que 34, sur le bord aval du canal d'éjection 2, présente deux prolongements vers l'amont, en forme de plaques parallèles, 35a et 35b (voir figure 7). La partie intermédiaire du premier levier, 36, d'un système de trois leviers, est articulée sur un axe 37 entre les deux plaques 35a et 35b. Le levier de commande correspondant 7 comporte d'autre part une branche médiane, 7h, qui est parallèle à ses branches latérales (désignées par 7a et 7b sur les figures 1 et 2, mais non représentées sur la figure 6); un second levier, 38, a ses extrémités articulées, d'une part, en 38a, en un point de la branche médiane 7h du levier de commande 7, écarté de son axe de pivotement A, et, d'autre part, en 38b, à l'extrémité la plus proche du premier levier 36. L'autre extrémité du premier levier 36 est reliée, par l'intermédiaire d'une articulation 39a, à une première extrémité d'un troisième levier 39, dont la seconde extrémité est articulée en 39b, sur le poussoir 32, en un point situé entre la bride 31a et l'oreille 31b, mais plus proche de cette dernière. Enfin, la branche médiane 7h du levier de commande 7 est prolongée vers l'aval par un bras médian 8c, qui est parallèle aux bras latéraux prolongeant vers l'aval les branches latérales du levier de commande, comme visible sur la figure 1. Vers l'extrémité aval du bras médian 8c, est articulée, en 40a, une première extrémité d'une biellette 40, dont la seconde extrémité est articulée, en 40b, sur une chape 41, fixée sur la face interne du volet froid 29 correspondant. La biellette 40 asservit les pivotements du volet froid 29 à ceux du volet chaud commandé, 9, correspondant. La longueur de la biellette 40 est choisie de manière que, pour la position fortement inclinée sur l'axe de la tuyère, du volet chaud commandé, 9, qui est illustrée sur la figure 6, et qui correspond à la fermeture de la tuyère, le volet froid 29, asservi au volet chaud 9 par la biellette 40, présente également une inclinaison, cependant nettement plus faible, sur l'axe de la tuyère.

Comme on l'a déjà indiqué, les différentes pièces mobiles ont été représentées en traits pleins sur la figure 6 dans les positions respectives qu'elles occupent à la fermeture de la tuyère; notamment, l'ensemble formé par les volets froids tels que 29 et la jupe coulissante 30 qui les porte, occupe sa position extrême amont.

Lorsque les vérins de commande - non représentés sur la figure 6 - agissent par leurs tiges respectives, sur les leviers de commande tels que 7, de manière que ceux-ci pivotent autour de leurs axes A, en même temps que les volets chauds qui leur sont associés, dans le sens antihoraire, indiqué sur la figure 6 par la flèche F, il y a réduction progressive de l'inclinaison des volets chauds tels que 9 sur l'axe de la tuyère et ouverture progressive de celle-ci; en même temps, les biellettes telles que 40 poussent vers l'extérieur les volets froids tels que 29, jusqu'à la position 29', indiquée en traits mixtes sur la figure 6, pour laquelle lesdits volets froids forment pratiquement un anneau cylindrique dans le prolongement de la jupe coulissante cylindrique 30. Au fur et à mesure que le levier de commande 7 pivote dans le sens de la flèche F, il fait pivoter le premier levier 36, autour de son axe 37, dans le sens horaire, qui est indiqué sur la figure 6 par la flèche f. Par suite, l'extrémité 39a du premier levier 36 exerce, par l'intermédiaire du troisième levier 39, une poussée sensiblement dirigée vers l'aval, sur le poussoir 32, qui la transmet, par l'intermédiaire notamment de la bride 31a, à l'anneau de raidissement 31; celui-ci se déplace, sous l'action de cette poussée, vers l'aval, en entraînant, d'une part, la jupe coulissante 30, qui pour la pleine ouverture de la tuyère primaire vient en 30', et, d'autre part, les axes d'articulation amont 32 b du second ensemble de volets froids 29.

Au cours de l'ouverture de la tuyère, les volets froids 29 subissent donc un double mouvement de translation vers l'aval et d'ouverture. Cette disposition est particulièrement avantageuse dans la mesure où les réactions dues à l'inertie des organes mobiles, 29, 30, 31, sont transmises par l'ensemble 32-39-36-37-35a-35b à l'élément annulaire de structure 1, qui est fixé au canal d'éjection. Malgré le porte-à-faux dû à l'écartement longitudinal entre l'élément annulaire 1 qui encaisse les réactions, d'une part, et l'axe 37, qui contribue à les lui transmettre, le mécanisme décrit est parfaitement fiable, notamment à l'égard des déformations éventuelles, grâce au fait que les composantes radiales des réactions mentionnées sont relativement faibles.

Dans ce qui précède, on a décrit le cas où à chaque levier de commande correspond un mécanisme d'asservissement par levier 7h, biellette 38, levier 36, biellette 39, poussoir 32 d'articulation amont des volets froids 29. On peut bien entendu, compte-tenu des efforts relativement faibles en jeu, n'avoir qu'un nombre plus réduit d'ensemble d'asservissement des volets froids, par exemple un sur deux voire un sur trois ou même un sur quatre, mécanisme d'asservissement par rapport au nombre de leviers de commande 7 porteurs de volets chauds.

De préférence cependant, le système de fixation et d'asservissement des volets froids (35a, 35b, 7h, 38, 36, 39, 32, 8c et 40) doit être en un nombre au moins égal à trois et régulièrement répartis sur la périphérie pour supprimer les risques de coincement de l'ensemble des volets froids.

Il faut remarquer que l'ensemble des volets froids est asservi à la tuyère primaire et que deux paramètres importants de cet asservissement sont d'une part, la position du de fuite des volets froids par rapport au plan de sorde la tuyère primaire et d'autre part, l'angle de braguage des volet froids, et qu'un choix judicieux des longueurs des bras du levier 36 (respectivement côté du levier 38, et côté du levier 39 par rapport à l'articulation 37) et du levier 8c et de la longueur de la biellette 40 permet d'optimiser ces paramètres en fonction de la mission prévue pour l'avion.

Quelques variantes de réalisation de la présente invention vont être indiquees ci-après.

En ce qui concerne la tuyère primaire illustrée sur les figures 1 à 5, la chaîne de synchronisation peut différer de celle illustrée sur la figure 5 et précédemment décrite. Chaque rotule femelle, 18B, au lieu d'être montée sur une jumelle coulissante 17B, pourrait être portée par au moins un bras fixe tel que 7e; dans ce cas c'est la rotule mâle, 16A, devrait être portée par une jumelle coulissante telle que 17B. Dans une autre variante, aussi bien la rotule mâle 16A que la rotule femelle 18B pourraient être portées par des jumelles coulissantes, analogues à 17B, et montées dans des chapes, telles que 7g, aménagées dans les bords voisins des leviers de commande tels que 7A et 7B. Bien entendu, les rotules et leurs jumelles pourraient être aussi remplacées par d'autres organes connus d'accouplement, formant des maillons de longueurs variables entre les bords voisins des leviers de commande cents, de manière que l'ensemble des leviers de commande et des organes d'accouplement constitue une chaîne annulaire de longueur variable. Chaque levier de commande, tel que 7A ou 7B, pourrait avoir une forme différente de celle illustrée sur les figures 1 et 2 et précédemment décrite, par exemple la forme d'une plaque sensiblement trapézoïdale et d'épaisseur appropriée; la réalisation en forme de portique offre cependant l'avantage de concilier une grande résistance mécanique avec un poids modéré. Les portées 4a et 4b sur lesquelles pivotent respectivement les côtés correspondants de deux leviers de commande adjacents, tels que 7A et 7B, pourraient être indépendantes l'une de l'autre, et portées par des saillies correspondantes de l'élément annulaire de structure 1.

La présente invention s'étend également à une tuyère du type indiqué, dans laquelle les bords voisins de chaque paire de leviers de commande, associés respectivement à deux volets commandés adjacents, sont munis de moyens quelconques de coopération desdits bords voisins, ces moyens assurant la synchronisation du mouvement de pivotement des leviers de commande porteurs des volets chauds.

Concernant la couronne de volets froids associée à la tuyère primaire qui est illustrée sur les figures 6 et 7, chaque système de trois leviers 36-38-39 pourrait être remplacé par une chaîne cinématique équivalente, transformant le pivotement du levier de commande 7 correspondant, en un mouvement de translation du poussoir 32 et de la jupe coulissante 30, portant les volets froids tels que 29, auquel s'ajoute un mouvement de rotation des volets froids.

## Revendications

1. Ensemble d'éjection, en particulier pour turboréacteur, comportant notamment au moins un ensemble annulaire de volets (9, 10), dits "chauds", constituant une tuyère primaire dont les bords amont respectifs sont articulés sur un élément de structure (1) de forme annulaire, solidaire du canal d'éjection (2), des vérins de commande (13), dont les corps sont reliés à des parties fixes dudit canal (2) et un ensemble de leviers de commande (7), dont chacun s'étend sensiblement sur toute la largeur d'un volet chaud sur deux, dit "volet commandé" (9), coopère avec ledit volet et est monté pivotant sur au moins un support (4) de deux leviers de commande de volets adjacents, ledit support (4) étant solidaire de l'élément annulaire de structure (1), les extrémités des tiges de commande (12) desdits vérins (13) étant respectivement articulées sur au moins un levier de commande (7) sur deux, en des points d'articulation (14) qui sont écartés des axes respectifs (A, B) de pivotement desdits leviers (7), ensemble d'injection caractérisé en ce que lesdits volets (9) sont articulés sur les dits supports (4) et par le fait que les bords voisins de chaque paire de leviers de commande (7) porteurs de volets chauds adjacents (9) sont munis de moyens de coopération desdits bords voisins, ces moyens assurant la synchronisation des mouvements de pivotement des leviers de commande (7) et des volets commandés (9) qui leur sont associés et par le fait que ces leviers de commande sont articulés du côté radialement interne de la tuyère primaire autour d'axes concourants portés par ledit support (4) et enfin par le fait qu'il comporte une couronne de volets froids (29) asservie en position longitudinale et en braquage sur l'axe de la turbomachine par un système de leviers biellettes et poussoirs (7h, 38, 36, 39, 32, 8C, 40) à la position desdits leviers de commande (7).

2. Ensemble d'éjection selon la revendication 1 caractérisé en ce que une tige de commande (12) de vérin (13) est articulée sur chaque levier de commande (7).

3. Ensemble d'éjection selon l'une quelconque des revendications 1 et 2 caractérisé en ce que les axes géométriques de pivotement (A, B) de deux leviers de commande voisins (7A, 7B) de la tuyère primaire font entre eux un angle ($\alpha$) proche de 360/N degrés, et que les bords voisins de ces deux leviers de commande (7A, 7B) sont accouplés, en des points écartés de leurs axes respectifs de pivotement (A, B), par des organes d'accouplement (16A, 18B), aménagés de façon à compenser les variations de l'écartement des points d'accouplement lors du pivotement des volets (9A, 9B), de manière que les leviers de commande (7A, 7B), et les organes d'accouplement (16A, 18B) de leurs bords voisins forment une chaîne annulaire de longueur variable.

4. Ensemble d'éjection selon la revendication 3, caractérisé en ce que les organes d'accouplement des bords voisins de deux leviers de commande (7A, 7B) comprennent une rotule mâle (16A) et une rotule femelle (18B), qui sont engagées l'une dans l'autre, et qui sont montées respectivement aux points d'accouplement des deux leviers (7A, 7B), l'une au moins des deux rotules (16A, 18B) étant portée par une jumelle (17B), elle-même montée pivotante autour d'un axe (19B), situé de préférence dans le plan passant par l'axe de la tuyère et par le point de concours (0) des axes de pivotement (A, B) des deux leviers (7A, 7B).

5. Ensemble d'éjection selon la revendication 4, caractérisé en ce que chaque levier de commande est muni d'une rotule mâle en l'un de ses deux points d'accouplement, et d'une rotule femelle en son autre point d'accouplement.

6. Ensemble d'éjection selon la revendication 4, caractérisé en ce qu'alternativement un levier de commande (7A) sur deux est muni de rotules mâles (16A) en ses deux points d'accouplement, chacun des autres leviers de commande (7B) étant muni de rotules femelles (18B) en ses deux points d'accouplement.

7. Ensemble d'éjection selon l'une quelconque des revendications 3 à 6, caractérisé en ce que les bords voisins de deux leviers de commande (7A, 7B) sont montés pivotants sur deux portées (4a, 4b), disposées aux extrémités d'un même support (4), qui est fixé à l'élément annulaire de structure (1), au moyen d'un crochet (3) et d'une vis (5) traversant ledit crochet (3), et qui sert d'articulation pour les bords amont des deux volets commandés (9A, 9B), associés respectivement aux deux leviers considérés (7A, 7B), ainsi que pour le bord amont du volet suiveur (10), interposé entre ces deux volets commandés (9A, 9B).

8. Ensemble d'éjection selon la revendication 7, caractérisé en ce que chaque crochet (3) est ouvert vers l'intérieur de la tuyère, et que la vis (5) qui le traverse est vissée par son extrémité dans un trou taraudé (4e) du support (4) du tourillon.

9. Ensemble d'éjection selon l'une quelconque des revendications 3 à 8 caractérisé en ce que chaque levier de commande (7) a sensiblement la forme d'un portique, dont les branches latérales (7a, 7b) sont montées respectivement pivotantes sur des portées (4a, 4b) du support (4), alignées et solidaires de l'élément annulaire de structure (1), tandis que sa barre transversale (7c) porte, à ses extrémités, le système d'accouplement (16A, 18B) entre les deux leviers de commande adjacents (7A, 7B).

10. Ensemble d'éjection selon l'une des revendications 4 à 6 et l'une quelconques des revendications 7 à 9 caractérisé en ce que chaque rotule mâle (16A) est portée par un bras (7e) prolongeant l'une des extrémités de la barre transversale (7c) du levier de commande (7) correspondant, et que la jumelle coulissante (17B) portant chaque rotule femelle (18B) est montée dans un évidement en forme de chape (7g) de l'une des extrémités de ladite barre transversale (7c) du levier (7) correspondant, de façon à pivoter autour d'un axe (19B) perpendiculaire à la branche latérale (7a ou 7b) correspondante dudit levier (7) en restant en contact avec deux surfaces planes, parallèles (7g1, 7g2) de la chape (7g).

11. Ensemble d'éjection selon l'une quelconque des revendications 9 et 10, caractérisé en ce que chaque volet commandé (9) prend appui, sous l'action de la pression des gaz éjectés, contre les extrémités des branches latérales (7a, 7b) du levier de commande correspondant (7), ainsi que, au moins ponctuellement, sur deux bras (8a, 8b), prolongeant vers l'aval lesdites branches latérales (7a, 7b) du levier (7).

12. Ensemble d'éjection selon la revendication 11, caractérisé en ce que chaque volet commandé (9) est fixé aux extrémités aval des bras (8a, 8b) du levier de commande correspondant (7).

13. Ensemble d'éjection selon l'une quelconque des revendications 1 à 12, caractérisé en ce que chaque vérin de commande (13), à déplacement linéaire, a l'extrémité amont de son corps, articulée, par l'intermédiaire d'une tige (20) longue et d'une articulation à rotule (24a, 24b), à l'extrémité aval d'une patte (21) d'étalement des efforts, qui est appliquée, sur une partie au moins de sa longueur, sur la paroi externe (2) du canal d'éjection, à laquelle l'extrémité amont de ladite patte d'étalement (21) est fixée, par exemple au moyen d'un boulon (27).

14. Ensemble d'éjection selon la revendication 13, caractérisé en ce que les parties mâle (24a) et femelle (24b) de l'articulation à rotule sont assemblées par une goupille (25) engagée dans un logement (26), qui s'étend perpendiculairement au plan de déplacement du vérin (13), et dont la section transversale est ovalisée dans la direction de l'axe (C) dudit vérin (13).

15. Ensemble d'éjection selon l'une quelconque des revendications 1 à 14, caractérisé en ce que la couronne annulaire de volets froids (29) associée à la tuyère primaire enveloppe sans contact l'ensemble de volets chauds (9, 10), chaque volet froid (29) étant accouplé par au moins une biellette (40) avec ce volet chaud correspondant (9), et ayant son bord amont articulé sur le bord aval d'une jupe (30), qui enveloppe sans contact la paroi (2) du canal d'éjection et en ce que certains des leviers de commande (7) sont accouplés chacun avec la jupe coulissante (30) et les volets froids (29) correspondants, par au moins un système de leviers qui provoque un déplacement longitudinal de la jupe (30) et de l'ensemble de volets froids (29).

16. Ensemble d'éjection selon la revendication 15 caractérisé en ce que certains des leviers de commande (7) sont accouplés chacun avec la jupe coulissante (30) et les volets froids (29) correspondants par un système de trois leviers (36-38-39) qui, en prenant appui sur l'élément annulaire (1) fixée au canal d'éjection (2), transforme le pivotement du levier de commande (7) correspondant, en un déplacement longitudinal de la jupe (30) et de la couronne de volets froids (29).

17. Ensemble d'éjection selon la revendication 15, caractérisé en ce que chaque système de leviers d'asservissement de la couronne de volets froids (29) comporte un premier levier (36), dont la partie intermédiaire est montée pivotante sur un axe (37), parallèle à l'axe de pivotement (A) du levier de commande (7) correspondant, et porté (35a, 35b), de l'élément annulaire (1), fixé au canal d'éjection (2), ainsi qu'un second et un troisième leviers (38 et 39), qui relient, grâce à des articulations, les extrémités dudit premier levier (36), l'une (38b) à un point (38a) du levier de commande (7), écarté de son axe de pivotement (A), et l'autre extrémité (39a), à un élément (32) solidaire de la jupe coulissante (30).

18. Ensemble d'éjection selon la revendication 17 caractérisé en ce que au moins certains des leviers de commande (7) en forme de portique comportent une branche médiane (7h), qui est parallèle à ses branches latérales (7a, 7b), et à laquelle est articulée l'une (38a) des extrémités du second levier (38), ainsi qu'un bras médian (8c), prolongeant vers l'aval ladite branche médiane (7h), et que la biellette (40) d'accouplement des volets chaud et froid, associés au levier de commande (7) considéré, a une extrémité (40a) articulée sur son bras médian (8c).

19. Ensemble d'éjection selon l'une quelconque des revendications 15 à 18 caractérisé en ce que l'ensemble des leviers (38, 36, 39, 40) provoque à la fois un recul vers l'aval de la jupe (30) portant l'ensemble des volets froids (29) et un braquage de ceux-ci dans une position convergente, lorsque les volets chauds commandés sont braqués, le braquage des volets froids étant toutefois plus faible que ceux des volets chauds.

## Patentansprüche

1. Ausstoßanordnung, insbesondere für Turbomaschinen,
mit wenigstens einer ringförmigen Anordnung von eine Primärdüse bildenden, als "Heißklappen" bezeichneten Verschlußklappen (9, 10), die jeweils mit ihren stromaufwärtigen Rändern an einem ringförmigen Konstruktionselement (1) angelenkt sind, das mit dem Ausstoßkanal (2) fest verbunden ist,
mit Steuerzylindern (13), deren Körper mit festen Teilen des genannten Kanals (2) verbunden sind,
sowie mit einer Anordnung von Steuerhebeln (7), die sich jeweils über die gesamte Breite jeder zweiten, als "gesteuerte Klappe" bezeichneten, Heißklappe erstrecken, mit dieser Klappe zusammenwirken und schwenkbar an wenigstens einem Trägerteil (4) für die Steuerhebel zweier einander benachbarter Klappen montiert sind, wobei dieses Trägerteil (4) mit dem ringförmigen Konstruktionselement (1) fest verbunden ist und die Enden der Stangen (12) der Steuerzylinder (12) wenigstens an jedem zweiten Steuerhebel (7) in Punkten (14) angelenkt sind, die von den jeweiligen Schwenkachsen (A, B) der Steuerhebel (7) beabstandet sind,
dadurch gekennzeichnet,
daß die Klappen (9) mit den Trägerteilen (4) gelenkig verbunden sind,
daß die einander benachbarten Ränder jedes Paares von Steuerhebeln (7), die Träger für aneinander grenzende Heißklappen (9) bilden, Mittel aufweisen, über die benachbarte Ränder zusammen wirken und die die Synchronisation der Schwenkbewegungen der Steuerhebel (7) und der ihnen zugeordneten gesteuerten Klappen (9) gewährleisten,
daß die Steuerhebel auf der radial inneren Seite der Primärdüse um von dem Trägerteil (4) getragene konvergierende Achsen schwenkbar sind,
und daß ein Kranz von als "Kaltklappen" bezeichneten Verschlußklappen (27) vorgesehen ist, die in ihrer Längsposition und in ihrer Winkelposition bezüglich der Achse der Turbomaschine durch ein System von Pleuel- und Stößelhebeln (7h, 38, 36, 39, 32, 8C, 40) der Position der Steuerhebel (7) nachgeführt werden.

2. Ausstoßanordnung nach Anspruch 1, dadurch gekennzeichnet, daß an jedem Steuerhebel (7) eine Stange (12) eines Zylinders (13) angelenkt ist.

3. Ausstoßanordnung nach einem der Ansprüche 1 und 2, dadurch gekennzeichnet,
daß die geometrischen Schwenkachse (A, B) zweier benachbarter Steuerhebel (7A, 7B) der Primärdüse einen Winkel (α) von nahezu 360°/N einschließen,
und daß die einander benachbarten Ränder dieser beiden Steuerhebel (7A, 7B) in von ihren jeweiligen Schwenkachsen (A, B) beabstandeten punkten durch Kupplungsorgane (16A, 18B) miteinander verbunden sind, die derart angeordnet sind, daß die beim Schwenken der Klappen (9A, 9B) auftretenden Abstandsänderungen der Verbindungspunkte so konpensiert werden, daß die Steuerhebel (7A, 7B) und die Kupplungsorgane (16A, 18B) ihrer benachbarten Ränder eine ringförmige Kette variabler Länge bilden.

4. Ausstoßanordnung nach Anspruch 3, dadurch gekennzeichnet, daß die die einander benachbarten Ränder zweier Steuerhebel (7A, 7B) verbindenden Kupplungsorgane ein männliches Kugelgelenkteil (16A) und ein weibliches Kugelgelenkteil (18B) umfassen, die miteinander im Eingriff stehen und an den jeweiligen Verbindungspunkten der beiden Steuerhebel (7A, 7B) montiert sind, wobei wenigstens eines der beiden Kugelgelenkteile (16A, 18B) von einem Gabelteil (17B) getragen ist, das seinerseits um eine Achse (19B) schwenkbar ist, die vorzugsweise in der Ebene liegt, die durch die Achse der Düse und den Schnittpunkt (0) der Schwenkachsen (A, B) der beiden Steuerhebel (7A, 7B) verläuft.

5. Ausstoßanordnung nach Anspruch 4, dadurch gekennzeichnet, daß jeder Steuerhebel in einem seiner beiden Verbindungspunkte mit einem männlichen Kugelgelenkteil und an seinem anderen Verbindungspunkt mit einem weiblichen Kugelgelenkteil ausgestattet ist.

6. Ausstoßanordnung nach Anspruch 4, dadurch gekennzeichnet, daß jeder zweite Steuerhebel (7A) an seinen beiden Verbindungspunkten mit männlichen Kugelgelenkteilen (16A) und jeder der anderen Steuerhebel (7B) in seinen beiden Verbindungspunkten mit weiblichen Kugelgelenkteilen (18B) ausgestattet ist.

7. Ausstoßanordnung nach einem der Ansprüche 3 bis 6, dadurch gekennzeichnet, daß die einander benachbarten Ränder zweier Steuerhebel (7A, 7B) schwenkbar an zwei Ansätzen (4a, 4b) montiert sind, die an den Enden ein und desselben Trägerteils (4) angeordnet sind, das mittels eines Hakens (3) und einer diesen Haken (3) durchdringenden Schraube (5) aan dem ringförmigen Konstruktionselement (1) fixiert ist und als Gelenk dient für die die stromaufwärtigen Ränder der jeweils einem der beiden betrachteten Steuerhebel (7A, 7B) zugeordneten gesteuerten Klappen (9A, 9B) sowie für den stromaufwärtigen Rand der zwischen diesen beiden gesteuerten Klappen (9A, 9B) angeordnete Folgeklappe (10).

8. Ausstoßanordnung nach Anspruch 7, dadurch gekennzeichnet, daß jeder Haken (3) zum Innern der Düse hin offen ist und daß die ihn durchdringende Schraube (5) mit ihrem Ende in eine Gewindebohrung des Trägerteils des Zapfens eingeschraubt ist.

9. Ausstoßanordnung nach einem der Anprüche 3 bis 7, dadurch gekennzeichnet, daß jeder Steuerhebel (7) zumindest annähernd die Form eines Portals hat, dessen Seitenstege (7a, 7b) jeweils an miteinander fluchtenden Ansätzen (4a, 4b) des Trägerteils (4) schwenkbar montiert sind, die mit dem ringförmigen Konstruktionselement (1) fest verbunden sind, während der Quersteg (7c) an seinen Enden das zwischen den beiden benachbarten Steuerhebeln (7A, 7B) angeordnete Kupplungssystem (16A, 18B) trägt.

10. Ausstoßanordnung nach einem der Ansprüche 4 bis 6 und einem der Ansprüche 7 bis 9, dadurch gekennzeichnet, daß jedes männliche Kugelgelenkteil (16A) von einem Ausleger (7e) getragen ist, der eines der Enden des Querstegs (7c) des zugeordneten Steuerhebels (7) verlängert, und daß die jedes weibliche Kugelgelenkteil (18B) tragende Gleitgabel (17B) in einer gabelförmigen Ausnehmung (7g) an einem der Enden des Querstegs (7c) des betreffenden Steuerhebels (7) montiert ist, derart daß sie (17B) um eine Achse (19B) schwenkbar ist, die senkrecht zu dem entsprechenden Seitensteg (7a oder 7b) des Steuerhebels (7) verläuft, wobei sie mit den beiden ebenen parallelen Flächen (7g1, 7g2) der Ausnehmung (7g) in Berührung bleibt.

11. Ausstoßanordnung nach einem der Ansprüche 10 und 9, dadurch gekennzeichnet, daß jede gesteuerte Klappe (9) sich unter der Einwirkung des Drucks der ausgestoßenen Gase gegen die Enden der Seitenstege (7a, 7b) des betreffenden Steuerhebels (7) sowie zumindest punktuell auf zwei Arme (8a, 8b) abstützt, die die Seitenstege (7a, 7b) des Steuerhebels (7) in stromabwärtiger Richtung verlängern.

12. Ausstoßanordnung nach Anspruch 11, dadurch gekennzeichnet, daß jede gesteuerte Klappe (9) an den stromabwärtigen Enden der Arme (8a, 8b) des entsprechenden Steuerhebels (7) befestigt ist.

13. Ausstoßanordnung nach einem der Ansprüche 1 bis 12, dadurch gekennzeichnet, daß jeder linear verschiebbare Steuerzylinder (13) mit dem stromaufwärtigen Ende seines Körpers mittels eines langen Stabes (20) und eines Kugelgelenks (24a, 24b) an dem stromabwärtigen Ende eines Lappens (21) zur Kraftverteilung angelenkt ist, der wenigstens über einen Teil seiner Länge auf der Außenwandung des Ausstoßkanals angebracht ist, an der sein stromaufwärtiges Ende beispielsweise mittels eines Schraubenbolzens (27) befestigt ist.

14. Ausstoßanordnung nach Anspruch 13, dadurch gekennzeichnet, daß die männlichen Teile (24a) und die weiblichen Teile des Kugelgelenks durch einen Stift (25) verbunden sind, der in eine Aufnahme (26) eingreift, die sich senkrecht zur Verschiebungsebene des Steuerzylinders (13) erstreckt und die einen in Richtung der Achse (C) des Steuerzylinders (13) ovalen Querschnitt hat.

15. Ausstoßanordnung nach nach einem der Ansprüche 1 bis 14, dadurch gekennzeichnet, daß der der Primärdüse zugeordnete ringförmige Kranz von Kaltklappen (29) die Anordnung der Heißklappen (9, 10) berührungsfrei umschließt, wobei jede Kaltklappe (29) mittels wenigstens einer Pleuelstange (14) mit der zugeordneten Heißklappe (9) verbunden ist, und mit ihrem stromaufwärtigen Rand an dem stromabwärtigen Rand einer Gleitschürze (30) angelenkt ist, die die Wandung (2) des Ausstoßkanals berührungsfrei umschließt, und daß ein Teil der Steuerhebel (7) jeweils mit der Gleitschürze (30) und den entsprechenden Kaltklappen (29) durch wenigstens ein Hebelsystem verbunden ist, das eine Längsverschiebung der Gleitschürze (30) und der Anordnung von Kaltklappen (20) bewirkt.

16. Ausstoßanordnung nach Anspruch 15, dadurch gekennzeichnet, daß einige der Steuerhebel (7) mit der jeweiligen Gleitschürze (30) und den zugeordneten Kaltklappen (29) durch ein System von drei Hebeln (36-38-39) verbunden ist, die durch Abstützen auf dem an dem Ausstoßkanal (2) befestigten ringförmigen Konstruktionselement (1) die Schwenkbewegung des zugeordneten Steuerhebels (7) in eine Längsverschiebung der Gleitschürze (30) und des Kranzes von Kaltklappen (29) umwandeln.

17. Ausstoßanordnung nach Anspruch 15, dadurch gekennzeichnet, daß jedes der Hebelsysteme zur Nachführung des Kranzes von Kaltklappen (29) einen ersten Hebel (36) aufweist, dessen mittlerer Teil auf einer Achse (37) schwenkbar montiert ist, die parallel zur Schwenkachse (A) des zugeordneten Steuerhebels (7) verläuft und von wenigstens drei stromaufwärtigen Verlängerungen (35a, 35b) des ringförmigen Konstruktionselements (1) getragen ist, das an dem Ausstoßkanal (2) befestigt ist, und daß das Hebelsystem ferner einen zweiten und einen dritten Hebel (38 und 39) aufweist, die über Gelenke das eine Ende (38b) des ersten Hebels (36) mit einem punkt (38a) des Steuerhebels (7), der von seiner Schwenkachse (A) beabstandet ist, bzw. das andere Ende (39a) des ersten Hebels (36) mit einem mit der Gleitschürze (30) fest verbundenen Element (32) verbinden.

18. Ausstoßanordnung nach Anspruch 17, dadurch gekennzeichnet, daß wenigstens gewisse Exemplare der portalartig ausgebildeten Steuerhebel (7) einen zu seinen Seitenstegen (7a, 7b) parallelen Mittelschenkel (7h) besitzen, an dem das eine (38a) der Enden des zweiten Hebels (38) angelenkt ist, sowie einen mittleren Arm (8c), der den Mittelschenkel (7h) in der stromabwärtigen Richtung verlängert, und daß die Pleuelstange (40) zur Kupplung der dem betreffenden Steuerhebel (7) zugeordneten Heiß- und Kaltklappen mit einem Ende (40) an dessen mittleren Arm (8c) angelenkt ist.

19. Ausstoßanordnung nach einem der Ansprüche 15 bis 18, dadurch gekennzeichnet, daß das Hebelsystem (38, 36, 39, 40) gleichzeitig ein Zurückweichen der die Anordnung der Kaltklappen (29) tragenden Gleitschürze (30) in stromabwärtiger Richtung und eine Schwenkung der Kaltklappen (29) in eine konvergierende position bewirkt, wenn die gesteuerten Heißklappen geschwenkt werden, wobei die Schwenkung der Kaltklappen jedoch schwächer ist die der Heißklappen.

**Claims**

1. Ejection assembly, particularly for a turbojet engine, comprising at least one annular assembly of flaps (9, 10), termed "hot flaps", forming a primary nozzle and of which the respective upstream edges are pivoted on an annular structural member (1) rigidly secured to the jet pipe (2), actuators (13) having their bodies connected to fixed parts of the said pipe (2), and an assembly of control levers (7) each of which extends over substantially the entire width of one of every other hot flap, termed a "controlled flap", co-operates with said flap, and is pivotally mounted on at least one support (4) of two adjacent flap control levers, the said support (4) being rigidly connected to the annular structural member (1), and the ends of the actuator rods (12) of the said actuators (13) being respectively pivotally connected to at least every other control lever (7) at pivot points (14) which are spaced from the respective pivot axes (A, B) of said levers (7), the ejection assembly being characterised in that said flaps (9) are pivoted on said supports (4) and in that the adjacent edges of each pair of control levers (7) carrying adjacent hot flaps (9) are provided with cooperating means ensuring synchronisation of the pivoting movements of the control levers (7) and the controlled flaps (9) associated there with, in that these control levers are pivoted on the radially inner side of the primary nozzle about convergent shafts carried by said support (4), and finally in that it comprises an annular array of cold flaps (29) controlled in position longitudinally and angularly on the axis of the turbo-engine by means of a system of levers, links and push rods (7h, 38, 36, 39, 32, 8C, 40) according to the position of asid control levers (7).

2. Ejection assembly according to claim characterised in that an actuator rod (12) is pivoted on each control lever (7).

3. Ejection assembly according to either of claims 1 and 2, characterised in that the geometric pivot axes (A, B) of two adjacent control levers (7A, 7B) of the primary nozzle define between them an angle (α) of approximately 360/N degrees, and that the adjacent sides of these two control levers (7A, 7B) are coupled together, at points spaced from their respective pivot axes (A, B), by coupling members (16A, 18B) arranged so as to compensate for variations in the spacing between the coupling points upon pivoting of the flaps (9A, 9B), so that the control levers (7A, 7B) and the coupling members (16A, 18B) of their adjacent edges form an annular chain of variable length.

4. Ejection assembly according to claim 3, characterised in that the coupling members of adjacent edges of two control levers (7A, 7B) comprise a male joint member (16A) and a female joint member (18B) which are engaged one in the other and which are respectively mounted at the coupling, points of the two levers (7A, 7B), one at least of the two joint members (16A, 16B) being supported by a yoke (17B) which is pivotally mounted on a shaft (19B) preferably situated in the plane passing through the axis of the nozzle and the point of convergence (0) of the pivot axes (A,B) of the two levers (7A, 7B).

5. Ejection assembly according to claim 4, characterised in that each control lever is fitted with a male joint member at one of its two coupling points, and with a female joint member at its other coupling point.

6. Ejection assembly according to claim 4, characterised in that every other control lever (7A) is fitted with male joint members (16A) at its two coupling points, each of the other control levers (7B) being fitted with female joint members (18B) at its two coupling points.

7. Ejection assembly according to any one of claims 3 to 6, characterised in that the adjacent edges of two control levers (7A, 7B) are pivotally mounted on two bearings (4a, 4b) arranged at the ends of one and the same support (4), the support being fixed to the annular structural member (1) by means of a hook (3) and a screw (5) passing through said hook (3), and the support acting as a pivot for the upstream edges of the two controlled flaps (9A, 9B) associated respectively with the said two levers (7A, 7B), as well as for the upstream edge of the follower flap (10) interposed between the said two controlled flaps (9A, 9B).

8. Ejection assembly according to claim 7, characterised in that each hook (3) is open towards the inside of the nozzle and in that the screw (5) which passes through it is screwed at its end into a tapped bore (4e) in the pivot portion of the support (4).

9. Ejection assembly according to any one of claims 3 to 8, characterised in that each control lever (7) is substantially arch-shaped and has its side portions (7a, 7b) pivotally mounted respectively on aligned support bearings (4a, 4b) rigid with the annular structural member (1), while its cross-bar (7c) has at its ends, the means (16A, 18B) for coupling to the two adjacent control levers (7A, 7B).

10. Ejection assembly according to one of claims 4 to 6 together with any one of claims 7 to 9, characterised in that each male joint member (16A) is supported by an arm (7e) extending one of the ends of the cross-bar (7c) of the corresponding control lever (7), and in that the sliding yoke (17B) bearing each female joint member (18B) is mounted in a forked recess (7g) in one of the ends of the cross-bar (7c) of the corresponding lever, so as to pivot about a shaft (19B) perpendicular to the corresponding side

length.

portion (7a or 7b) of said lever (7) while remaining in contact with two parallel plane surfaces (7g1, 7g2) of the fork (7g).

11. Ejection assembly according to claim 9 or claim 10, characterised in that each controlled flap (9) bears, under the action of the pressure of the discharged gases, against the ends of the side portions (7a, 7b) of the corresponding control lever (7) as well as, with at least point contact, on two arms (8a, 8b) extending downstream from said side portions (7a, 7b) of the lever (7).

12. Ejection assembly according to claim 11, characterised in that each controlled flap (9) is secured to the downstream ends of the arms (8a, 8b) of the corresponding control lever (7).

13. Ejection assembly according to any one of claims 1 to 12, characterised in that each actuator (13), with linear displacement, has the upstream end of its body pivotally connected, by means of a long rod (20) and a ball joint (24a, 24b), to the downstream end of a stress load spreading lug (21) which is applied, over at least a part of its length, on the outer wall (2) of the jet pipe, to which the upstream end of said spreading lug (21) is fixed, for example by means of a bolt (27).

14. Ejection assembly according to claim 13, characterised in that the male (24a) and female (24b) parts of the ball joint are coupled by means of a pin (25) engaged in a housing (26) which extends perpendicularly to the plane of displacement of the actuator (13), and the cross-section of which is ovalised in the direction of the axis (C) of said actuator (13).

15. Ejection assembly according to any one of claims 1 to 14, characterised in that the array of cold flaps (29) associated with the primary nozzle surrounds without contact the assembly of hot flaps (9,10), each cold flap (29) being coupled by means of at least one link (40) with a corresponding hot flap (9), and having its upstream edge pivoted at the downstream edge of a skirt (30) which surrounds without contact the wall (2) of the jet pipe, and in that some of the control levers (7) are each coupled with the sliding skirt (30) and the corresponding cold flaps (29) by at least one system of levers which causes a longitudinal displacement of the skirt (30) and of the assembly of cold flaps (29).

16. Ejection assembly according to claim 15, characterised in that some of the control levers (7) are each coupled with the sliding skirt (30) and the corresponding cold flaps (29) by a three-lever system (36-38-39) which, in bearing on the annular member (1) fixed to the jet pipe (2), converts pivotal movement of the control lever (7) into a longitudinal displacement of the skirt (30) and of the array of cold flaps (29).

17. Ejection assembly according to claim 15, characterised in that each system of levers controlling the array of cold flaps (29) comprises a first lever (36) having an intermediate part which is pivotally mounted on a shaft (37) parallel to the pivot axis (A) of the corresponding control lever (7) and supported by at least three upstream extensions (35a, 35b) of the annular member (1) fixed to the jet pipe (2), and second and third levers (38 and 39) which, through pivot joints, connect the ends of said first lever (36), one (38b) to a point (38a) of the control lever (7) spaced from its pivot axis (A), and the other end (39a) to a member (32) integral with the sliding skirt (30).

18. Ejection assembly according to claim 17, characterised in that at least some of the arch-shaped control levers (7) each comprise a central portion (7h) which is parallel to its side portions (7a, 7b) and to which one end (38a) of the second lever (38) is pivoted, and a central arm (8c) extending downstream from said central portion (7h), the link (40) coupling the hot and cold flaps associated with the said control lever (7) having one end (40a) pivoted on the central arm (8c).

19. Ejection assembly according to any one of claims 15 to 18, characterised in that the assembly of levers (36, 38, 39, 40) causes both a downstream rearward movement of the skirt (30) carrying the assembly of cold flaps (29) and a change in angle of these flaps in a convergent position, when the driven hot flaps are deflected, the angle change of the cold flaps being smaller than that of the hot flaps.

FIG.1

FIG.:2

FIG.:3

$d = 360°/N$

2 _ 4

FIG.: 5

22
23a
21
23
24a 24b
25
C
13
12
26
20
28 27 2
3

39
39a
29
3_4

0 149 943

32b

36

5a

FIG.: 4
3 3a
6 5

37

1

3b

35 b
35a
2
38b
38

FIG.: 7
34 2 4e 4 10 f
34 11 9

0 149 943

5

FIG.:6

0149943

4 — 4